**Europäisches Patentamt**

**European Patent Office**

**Office européen des brevets**

(19)

(11) Veröffentlichungsnummer: **0 325 987 B1**

(12) **EUROPÄISCHE PATENTSCHRIFT**

(45) Veröffentlichungstag der Patentschrift:
04.12.91 Patentblatt 91/49

(51) Int. Cl.⁵: **C09C 1/36**

(21) Anmeldenummer: **89100685.0**

(22) Anmeldetag: **17.01.89**

(54) **Verfahren zur Herstellung von Rutilmischphasenpigmenten.**

(30) Priorität: **28.01.88 DE 3802468**

(43) Veröffentlichungstag der Anmeldung:
**02.08.89 Patentblatt 89/31**

(45) Bekanntmachung des Hinweises auf die
Patenterteilung:
**04.12.91 Patentblatt 91/49**

(84) Benannte Vertragsstaaten:
**DE ES GB IT NL**

(56) Entgegenhaltungen:
**DE-B- 1 136 041**
**FR-A- 2 340 972**

(73) Patentinhaber: **BAYER AG**
**W-5090 Leverkusen 1 Bayerwerk (DE)**

(72) Erfinder: **Rademachers, Jakob, Dr.**
**Hoeninghausstrasse 34**
**W-4150 Krefeld 12 (DE)**
Erfinder: **Heisse, Hans-Peter, Dipl.-Ing.**
**Doerperhofstrasse 14**
**W-4150 Krefeld (DE)**

## Beschreibung

Die vorliegende Erfindung betrifft ein Verfahren zur Herstellung von Rutilmischphasenpigmenten durch Glühen von Feststoff-Mischungen aus Titandioxid und/oder Titandioxidhydrat mit farbgebenden Metallverbindungen, insbesondere des Chroms und/oder des Nickels, gegebenenfalls unter Zusatz von Verbindungen des Antimons, Niobs oder Wolframs, im indirekt beheizten, unter Luftzuführung betriebenen Drehrohrofen.

Rutilmischphasenpigmente sind aus der DE-A-1287236 bekannt. Es handelt sich hierbei um Buntpigmente, die durch Einbau farbiger Übergangselemente in das Kristallgitter des Rutils erhalten werden. Vornehmlich werden solche Metalle als Gastkomponente in das Wirtsgitter des Rutils eingebaut, deren Kationen-Radien in der Größenordnung des Titan IV-ion-Radius liegen. Weicht die Wertigkeit des einzubauenden Kations von der des Titanions, nämlich vier ab, so wird zum statistischen Valenzausgleich ein weiteres Kation mit anderer Wertigkeit zugesetzt.

Größere Bedeutung haben in der technischen Herstellung die Nickel- und Chrom-Rutil-Mischphasenpigmente erlangt. Hierbei werden zum Wertigkeitsausgleich zu den farbgebenden Nickel- und Chromoxiden höherwertige Oxide, insbesondere Antimon, seltener Niob- oder Wolframoxid, eingebaut (Ullmanns Encyklopädie der technischen Chemie, Verlag Chemie GmbH, Weinheim 1979, 4. Aufl., Bd. 18, S. 608).

Die Bildung der Mischphasenpigmente mit Rutilgitter wird durch Glühen von homogenen Mischungen aus Titandioxid als Wirtskomponente und den farbgebenden Gastkomponenten bis zu Temperaturen in Höhe von 1200°C bewirkt. Dabei können auch anstelle oxidischer Gastkomponenten hitzeunbeständige Verbindungen der den Komponenten zugrundeliegenden Metalle mit Titandioxid, Titanhydroxid oder Titandioxidhydrat gemischt werden, die bei Erhitzen an der Luft in die entsprechenden Oxide übergehen, z.B. Hydrate, Hydroxide, Carbonate, Acetate, Nitrate oder Formiate.

Das Glühen der Rohstoffmischungen erfolgt gewöhnlich in Drehrohröfen, wobei direkt oder indirekt beheizte Drehrohröfen eingesetzt werden. Bei direkt befeuerten Drehrohröfen geht man zweckmäßig von wäßrigen, die Ausgangskomponenten enthaltenden Suspensionen aus, wodurch ein Austrag von Feststoffen mit den Rauchgasen aus dem Ofen weitgehend vermieden wird. Bei Einsatz von trockenen Mischungen der Ausgangskomponenten eignen sich eher indirekt beheizte Öfen, da hierbei die Abgasmenge je nach den Ausgangsmaterialien ganz bzw. erheblich reduziert werden kann, so daß ein erhöhter Feststoffaustrag nicht zu befürchten ist.

Aus der DE-A-30 19 172 ist ein solches Verfahren zur Herstellung von Rutilmischphasenpigmenten bekannt geworden. Als Vorteil gegenüber früherer Verfahren wird die Wirtschaftlichkeit des vollkontinuierlichen Drehrohrprozesses für den Kalzinierschritt herausgestellt.

Zur Realisierung der Verfahrensvorteile ist die Installation eines relativ langen Drehrohres mit einem Verhältnis von Länge zu Durchmesser von 20 : 1 erforderlich. Abgesehen davon, daß indirekt beheizte Drehrohre, die auf Temperaturen bis etwa 1200°C, gemessen im zu glühenden Produkt, erhitzt werden, mit größerer Länge schwieriger zu konstruieren und zu betreiben sind, weisen die Öfen naturgemäß mit der größeren Länge höhere Abstrahlungsverluste als kürzere Öfen gleichen Inhalts auf.

Eine weitere Maßnahme zur Verwirklichung des Verfahrens besteht darin, daß die Belüftung im Gleichstrom mit dem zu kalzinierenden Material erfolgt, da andernfalls bei der energetisch vorteilhafteren Gegenstromfahrweise wenig brauchbare Produkte erhalten wurden.

Es ist bereits bekannt, Titandioxidhydrat, auch als Titanoxidhydroxid oder Metatitansäure bezeichnet, bei der Rutilmischphasen-Herstellung einzusetzen (DE-A-2605651).

Hierbei wird die aus der Hydrolyse von schwefelsauren Titanerzaufschlußlösungen nach Filtration und Waschen erhaltene Suspension mit Feststoffgehalten von etwa 30 Gew.-% eingesetzt. Das in dieser wäßrigen Suspension, die gewöhnlich in Form von Paste oder Filterkuchen anfällt, enthaltene Titandioxidhydrat hat einen niedrigen pH-Wert um 1 bis 2 und weist noch beträchtliche Mengen an gebundener Schwefelsäure in Höhe von 5 bis 10 Gew.-% auf, die sich nicht auswaschen läßt (Ullmanns Encyklopädie der technischen Chemie, Band 18, 1979, Seite 576, Spalte 1).

Der Nachteil dieses titanhaltigen Materials als Ausgangssubstanz für die Rutilmischphasenpigemente besteht darin, daß erst beim Glühen die Schwefelsäure freigesetzt wird. Hiermit ist eine erhöhte Korrosionsgefahr im Drehrohr gegeben. Zusätzlich wird ein beträchtlicher Aufwand der Abgasbehandlung erforderlich.

Der Einsatz dieser Titanverbindungen führt darüber hinaus nicht zu verbesserten Rutilmischphasenpigmenten. Auch der Einsatz von geglühtem Anatas ist aus der DE-A-1136041 bekannt, führt aber nicht zu der geforderten Pigmentqualität.

Aufgabe der vorliegenden Erfindung ist es, ein verbessertes Verfahren zur Herstellung von Rutilmischphasenpigmenten zur Verfügung zu stellen, welches die beschriebenen Nachteile nicht aufweist.

Überraschenderweise wurde nun gefunden, daß diese Forderungen durch ein Verfahren zur Herstellung von Rutilmischphasenpigmenten durch Glühen von Feststoff-Mischungen aus Titandioxid und/oder Titandioxidhydrat mit farbgebenden Metallverbindungen, insbesondere des Chroms und/oder des Nickels, gegebenenfalls unter Zusatz von Verbindungen des Antimons, Niobs oder Wolframs, im indirekt beheizten, unter Luftzuführung betriebenen Drehrohrofen erfüllt werden, welches dadurch gekennzeichnet ist, daß als Titankomponente in der Ausgangsmischung ganz oder teilweise ein ungeglühtes salzfreies Titandioxid mit einer spezifischen Oberfläche nach BET von 50 bis 500 m²/g, vorzugsweise 250 bis 350 m²/g, eingesetzt wird.

Durch den Zusatz des erfindungsgemäßen Titandioxids, welches durch Neutralisieren, Waschen und Trocknen von Titandioxidhydrat gewonnen werden kann, erzielt man die erfindungsgemäßen Vorteile beim Kalzinierschritt zur Herstellung von Rutilmischphasenpigmenten im indirekt beheizten Drehrohrofen. Diese Vorteile bestehen in der Verkürzung der Verweilzeit durch beschleunigten Umsatz und damit Erhöhung der Kapazität des Drehrohrofens, auch in Drehrohröfen, die ein kleineres Verhältnis von Länge zu Durchmesser als 20 : 1, beispielsweise 5 bis 10 : 1, aufweisen.

Vorteilhaft wird das feinteilige Titandioxid durch Neutralisieren des in der Titandioxidpigmentherstellung als Zwischenprodukt anfallenden Titandioxidhydrats mit Natronlauge, Waschen und Eindicken auf einem Querstrom filter und Trocknen bei maximal 150°C im Zerstäubungstrockner hergestellt.

Ein derartig feinteiliges Titandioxid ist als Handelsprodukt unter der Bezeichnung "Bayertitan PK 5585" (Handelsprodukt der Bayer AG) erhältlich. Es ist eine gut rieselfähige Ware mit einem $TiO_2$-Gehalt von 89 bis 92 Gew.-%, entsprechend einem Glühverlust von 8 bis 11 Gew.-%, einem, pH-Wert von 5,5 bis 6,5, einer Kristallitgröße im Bereich von 0,01 μm und einer spezifischen Oberfläche nach BET von 250 bis 350 m²/g (BET-Meßmethode nach DIN 66 131, Abschnitt 6, Okt. 1973 : 5-Punktmethode, Meßgas-Stickstoff, Adsorption bei der Temperatur des siedenden Stickstoffs, Annahme des Flächenbedarfs einer Stickstoffmolekel von 0,162 nm². Vorbehandlung : 1 Stunde Ausheizen im Stickstoffstrom bei 130°C). Der $Na_2O$-Gehalt liegt unter 0,1 Gew.-% und der Sulfatgehalt unter 0,6 Gew.-%.

Bevorzugt wird somit erfindungsgemäß ein feinteiliges Titandioxid eingesetzt, welches einen pH-Wert von 5 bis 7 und einen Glühverlust von höchstens 12 Gew.-% aufweist.

Überraschenderweise ist der Zusatz nur bei Verwendung von trockenen Ausgangsmischungen wirksam. In wäßrigen Suspensionen oder Pasten der Rohstoffmischungen konnte kein Fortschritt erzielt werden. Die zugesetzten Mengen zeigen dann optimale Wirkung bezüglich Kalzinierverhalten und Pigmentqualität, wenn sie sich bei etwa 5 bis 50 Gew.-%, vorzugsweise 10 bis 20 Gew.-%, auf Gesamt- Titandioxidgehalt bezogen, bewegen. Niedrigere Zusätze zeigen zu geringe Effekte ; bei höheren Zusatzmengen werden Klinker mit sehr niedrigem Schüttgewicht zwischen 0,3 und 0,4 kg/l erhalten, die die Gefahr des Austragens aus dem Drehrohr mit der aufgegebenen Luftmenge in sich bergen. Vorzugsweise werden 10 bis 20 Gew.-% des gesamt eingesetzten Titandioxids vom zugesetzten feinteiligen Titandioxid aufgebracht.

Nach dem erfindungsgemäßen Verfahren erhält man bei vergleichbarer doppelter Ofenleistung einen weichen Klinker, der sich im Gegensatz zur üblichen, sehr aufwendigen Naßmahlung gleich gut trocken in üblichen Pigmentmühlen mahlen läßt.

Auch erhält man bei der energetisch günstigeren Gegenstromfahrweise durch Luftzuführung von der Produktaustragsseite des Drehrohrofens aus einheitliche, leicht aufgranulierte, nicht staubende Klinker, die zu farbreinen Pigmenten guter Qualität führen.

Das Verfahren der Erfindung soll am folgenden Beispiel näher erläutert werden, ohne daß hierin eine Einschränkung zu sehen ist.

Beispiel 1

Ein mit drei Heizzonen versehener, indirekt beheizter Drehrohrofen mit einem Drehrohr aus hitzebeständigem Metall (Länge 2 m, Durchmesser 30 cm), versehen mit einem 5 cm hohen Überlaufwehr, wurde bei einer Drehzahl von 5 Umdrehungen pro Minute und einer Neigung von 1% mit stündlich 5 kg einer homogenen Mischung folgender Zusammensetzung beschickt :

```
74,6 Gew.-% Bayertitan A*  (= Anatas)
 9,2 Gew.-% Bayertitan PK 5585* (= feinteiliger
                                    Anatas)
 4,8 Gew.-% Chromoxid GN*
11,4 Gew.-% Antimon III-oxid
```

* Handelsprodukte der Bayer AG.

Die höchste Temperatur im Produkt wurde auf 1040°C gehalten. An der Stirnseite des Ofens wurde auf der Materialaustragsseite eine Luftmenge von stündlich, 1,5 m³ zugeführt. Mit Hilfe des Abgasventilators ließ sich ein Unterdruck von 0,1 bis 0,3 mbar unter Atmosphärendruck aufrechterhalten. Als Klinker wurde ein bis zu 3 mm aufgranuliertes, farbtonmäßig einheitliches Produkt mit einem Schüttgewicht von 0,77 kg/l erhalten. Aus der anfallenden Klinkermenge von etwa 4,9 kg/h errechnet sich eine spezifische Ofenleistung von 35 kg/m³ · h. Nach dem Austrag aus dem Drehrohrofen gelangt der Klinker zur Abkühlung und Mahlung. Es wurde ein farbreines helles Gelbpigment mit guter Sättigung und Farbstärke erhalten.

## Beispiel 2 (Vergleichsbeispiel)

5 kg einer homogenen Mischung aus :

**83,7 Gew.-% Bayertitan A***

**4,8 Gew.-% Chromoxid GN***

**11,5 Gew.-% Antimon III-oxid**

wurden stündlich auf den in Beispiel 1 beschriebenen Ofen gegeben. Die sonstigen Bedingungen blieben wie in Beispiel 1 unverändert. Der erhaltene Klinker wies ein Schüttgewicht von 0,95 kg/l auf. Nach dem Mahlen erhielten wir ein unbefriedigendes Gelbpigment, das wesentlich dunkler und schmutziger als das in Beispiel 1 war. Erst bei Absenken der zugeführten Rohmischungsmenge auf 2,5 kg pro Stunde konnte ein gleich helles, jedoch etwas weniger gesättigtes Pigment erhalten werden. Das Schüttgewicht lag bei 0,9 kg/l. Die spezifische Ofenleistung errechnete sich bei 141 l Ofeninhalt zu 17,7 kg/m³ · h.

## Patentansprüche

1. Verfahren zur Herstellung von Rutilmischphasenpigmenten durch Glühen von Feststoff-Mischungen aus Titandioxid und/oder Titandioxidhydrat mit farbgebenden Metallverbindungen, insbesondere des Chroms und/oder des Nickels, gegebenenfalls unter Zusatz von Verbindungen des Antimons, Niobs oder Wolframs, im indirekt beheizten, unter Luftzuführung betriebenen Drehrohrofen, dadurch gekennzeichnet, daß als Titankomponente in der Ausgangsmischung ganz oder teilweise ein ungeglühtes, salzfreies Titandioxid mit einer spezifischen Oberfläche nach BET von 50 bis 500 m²/g, vorzugsweise 250 bis 350 m²/g, eingesetzt wird.

2. Verfahren gemäß Anspruch 1, dadurch gekennzeichnet, daß der Anteil an zugesetztem feinteiligem Titandioxid in der Ausgangsmischung 5 bis 50 Gew.-%, vorzugsweise 10 bis 20 Gew.-%, des Gesamttitandioxids beträgt.

3. Verfahren gemäß der Ansprüche 1 und 2, dadurch gekennzeichnet, daß das eingesetzte feinteilige Titandioxid einen pH-Wert von 5 bis 7 und einen Glühverlust von höchstens 12 Gew.-% aufweist.

4. Verfahren gemäß Ansprüche 1 bis 3, dadurch gekennzeichnet, daß die dem Drehrohrofen zugeführte Luft im Gegenstrom zur Fließrichtung der Feststoffe geleitet wird.

## Claims

1. A process for the production of rutile mixed-phase pigments by calcination of solid mixtures of titanium dioxide and/or titanium dioxide hydrate with dye-producing metal compounds, particularly of chromium and/or nickel, optionally with addition of compounds of antimony, niobium or tungsten, in an indirectly heated rotary kiln supplied with air, characterized in that an uncalcined, salt-free titanium dioxide having a specific BET surface of 50 to 500 m²/g and preferably 250 to 350 m²/g is completely or partly used as the titanium component in the starting mixture.

2. A process as claimed in claim 1, characterized in that the proportion of finely divided titanium dioxide added in the starting mixture is from 5 to 50% by weight and preferably from 10 to 20% by weight of the total titanium dioxide.

3. A process as claimed in claims 1 and 2, characterized in that the finely divided titanium dioxide used

* Handelsprodukte der Bayer AG.

has a pH value of 5 to 7 and an ignition loss of at most 12% by weight.

4. A process as claimed in claims 1 to 3, characterized in that the air supplied to the rotary kiln flows in countercurrent to the solids.

## Revendications

1. Procédé de fabrication de pigments au rutile à phases mixtes par calcination de mélanges de matières solides constitués de dioxyde de titane et/ou de dioxyde de titane hydraté avec des composés métalliques chromogènes, notamment de chrome et/ou de nickel, éventuellement avec addition de composés d'antimoine, de niobium ou de tungstène, dans un four tubulaire rotatif à chauffage indirect, fonctionnant avec arrivée d'air, caractérisé en ce qu'on utilise comme composant contenant du titane dans le mélange de départ, en totalité ou en partie, un dioxyde de titane dépourvu de sel, non calciné, ayant une surface spécifique selon la méthode BET de 50 à 500 m²/g, de préférence de 250 à 350 m²/g.

2. Procédé suivant la revendication 1, caractérisé en ce que la proportion de dioxyde de titane ajouté en fines particules dans le mélange de départ s'élève à 5-50% en poids, de préférence à 10-20% en poids du dioxyde de titane total.

3. Procédé suivant les revendications 1 et 2, caractérisé en ce que le dioxyde de titane en fines particules utilisé présente une valeur de pH de 5 à 7 et une perte au feu d'un maximum de 12% en poids.

4. Procédé suivant les revendications 1 à 3, caractérisé en ce que l'air arrivant au four tubulaire rotatif passe à contre-courant avec la direction dans laquelle les matières solides se déplacent.